# EUROPEAN PATENT APPLICATION

(11) **EP 1 416 361 A2**
(43) Date of publication of application: **06.05.2004**
(21) Application number: 03022943.9
(22) Date of filing: 09.10.2003
(51) Int. Cl.: G06F 3/023

(54) **Input mode selector on a mobile device**

(30) Priority: 31.10.2002 US 423233 P; 28.03.2003 US 401433
(71) Applicant: MICROSOFT CORPORATION, Redmond, WA 98052 (US)
(72) Inventor: Cibelli, Maurizio, Seattle Washington 98102 (US); Davis, Peter Gregory, Kirkland Washington 98033 (US)
(74) Representative: Grünecker, Kinkeldey, Stockmair & Schwanhäusser Anwaltssozietät

(57) **Abstract**

A mobile device contains a dedicated key for switching between input modes. A special key code is assigned to that key. If a user presses the dedicated key, that key code is generated and passed to the operating system of the mobile device. In response, a shell determines what the current input mode is and instructs an Input Method Manager to switch the input mode from the current input mode to a "next" input mode. Each available input mode may be identified in an Input Mode Table.

## Description

### Background of the Invention

Small, mobile computing devices such as personal desktop assistants, including hand-held and pocket-sized computers, tablet personal computers and the like, are becoming important and popular user tools. In general, they have become small enough to be extremely convenient, while consuming less battery power, and at the same time have become capable of running more powerful applications.

However, the shrinking size of these devices creates problems for the input mechanisms used on these devices. For example, the reduced size of thumb keyboards (typically used on mobile devices) often prevents easy access to core functionalities. This problem particularly affects users of "non-Western" or Asian languages because of a need to routinely switch between input modes, such as between languages or between character sets used by speakers of a particular language.

### Summary of the Invention

The present invention is directed to an apparatus for selecting an input mode on a mobile device. Briefly stated, the invention envisions a dedicated key on a mobile-device keypad used for switching between modes. A special key code is assigned to that key. If a user presses the dedicated key, that key code is generated and passed to the operating system of the mobile device. In response, a shell determines what the current input mode is and instructs an Input Method Manager to switch the input mode from the current input mode to a "next" input mode. Each available input mode may be identified in an Input Mode Table.

A more complete appreciation of the present invention and its improvements can be obtained by reference to the accompanying drawings, which are briefly summarized below, to the following detailed description of illustrated embodiments of the invention, and to the appended claims.

### Brief Description of the Drawings

FIGURE 1 shows an illustration of an exemplary communications device 100 in accordance with the present invention.
FIGURE 2 is a functional block diagram illustrating an embodiment of components for use in communications device 100 in accordance with the present invention.
FIGURE 3 is a functional block diagram generally illustrating components of a system 300 in accordance with the present invention.
FIGURE 4 is a logical flow diagram generally illustrating a process for switching between input modes using a dedicated key on a mobile device in accordance with the invention.

### Detailed Description of the Invention

Briefly stated, the present invention is directed at a hardware key for use on a mobile device and dedicated to the purpose of switching the mobile device between particular input modes. The mobile device contains a dedicated key for switching between input modes. A special key code is assigned to that key. If a user presses the dedicated key, that key code is generated and passed to the operating system of the mobile device. In response, a shell determines what the current input mode is and instructs an Input Method Manager to switch the input mode from the current input mode to a "next" input mode. Each available input mode may be identified in an Input Mode Table.

### Illustrative Operating Environment

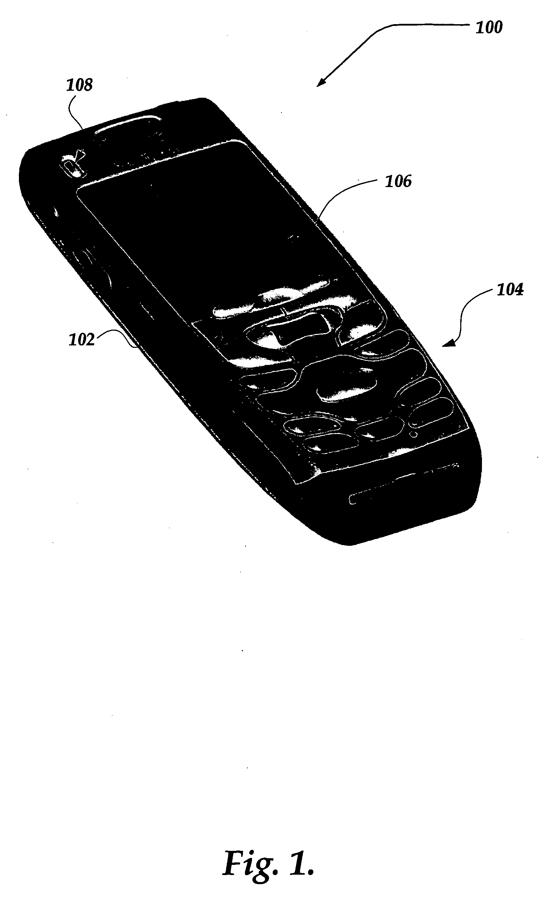

FIGURE 1 shows an illustration of an exemplary communications device 100 in accordance with the present invention. Communications device 100 may include many more or less components than those shown. The components shown, however, are sufficient to disclose an illustrative embodiment for practicing the invention. Communications device 100 includes casing 102. Casing 102 typically includes user interface instrumentalities such as user keys 104 and display 106. User keys 106 are often programmable and can be used for text input. Display 106 may optionally contain a touch screen interface, which can also be used for input of text. Additionally, "moji" (i.e., character) key 108 is provided in accordance with the present invention to sequentially select character input modes for character sets (or character set input modes) that are listed in a table.

Generally, communications device 100 may include virtually any portable computing device capable of receiving and transmitting signals between another communications device, and providing audio signals, such as ringer tones, and the like. Such devices include cellular telephones, smart phones, audio pagers, radio frequency (RF) devices, infrared (IR) devices, integrated devices combining one or more of the preceding devices, and the like. Communications device 100 may also include other devices, such as Personal Digital Assistants (PDA) with audio functions, handheld computers, wearable computers, and the like. As such, communications device 100 typically ranges widely in terms of capabilities and features.

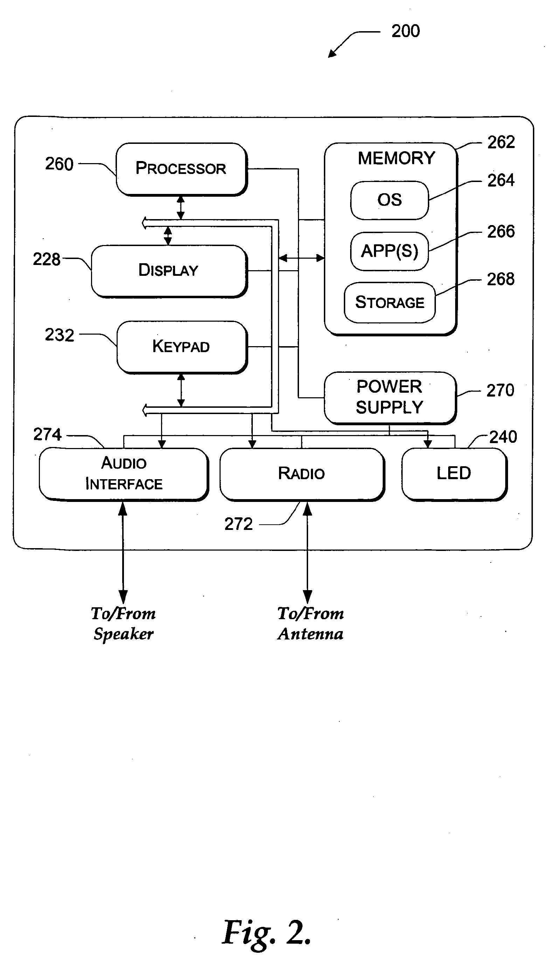

FIGURE 2 is a functional block diagram illustrating an embodiment of components 200 for use in communications device 100 in accordance with the present invention. Components 200 may include many more or less components than those shown. The components shown, however, are sufficient to disclose an illustrative embodiment for practicing the invention.

As shown in the figure, components 200 include processor 260, memory 262, display 228, and keypad 232. Memory 262 generally includes both volatile memory (e.g., RAM) and non-volatile memory (e.g., ROM, Flash Memory, or the like). Components 200 may include an operating system 264, such as the Windows CE operating system from Microsoft Corporation or other such operating system, which is resident in memory 262 and executes on processor 260. Keypad 232 may be a push button numeric dialing pad (such as on a typical telephone), a thumb-wheel, or the like. Display 228 may be a liquid crystal display, or any other type of display commonly used in a mobile communications device. For example, display 228 may be touch-sensitive, and would then also act as an input device.

One or more application programs 266 may be loaded into memory 262 and run on operating system 264. Examples of application programs include phone dialer programs, email programs, user ringer tone selection programs, and so forth. Components 200 also include non-volatile storage 268 within memory 262. Non-volatile storage 268 may be used to store persistent information which should not be lost if the communications device 100 is powered down. The application programs 266 may use and store information in storage 268, such as e-mail, user selectable ringer tones, and the like.

Components 200 also include power supply 270, which may be implemented as one or more batteries. Power supply 270 might further include an external power source, such as an AC adapter or a powered docking cradle that supplements or recharges the batteries.

Components 200 are also shown with two types of external notification mechanisms: LED 240 and audio interface 274. These devices may be directly coupled to power supply 270 so that when activated, they remain on for a duration dictated by the notification mechanism even though processor 260 and other components might shut down to conserve battery power. LED 240 may be programmed to remain on indefinitely until the user takes action to indicate the powered-on status of the device. Audio interface 274 is used to provide audible signals to and receive audible signals from the user. For example, audio interface 274 may be coupled to a speaker for providing audible output. Audio interface 274 may also be coupled to a microphone, receiving speaker, or the like, for receiving audible input, such as to facilitate a telephone conversation.

Components 200 also include radio 272 that performs the function of transmitting and receiving radio frequency communications. Radio 272 may be coupled to an antenna. Radio 272 facilitates wireless connectivity between components 200 and the outside world, via a communications carrier or service provider. Transmissions to and from radio 272 are conducted under the control of operating system 264 such that communications received by radio 272 may be disseminated to application programs 266 via operating system 264, and vice versa.

Radio 272 allows components 200 to communicate with other computing devices, such as over a network. Radio 272 is one example of communication media. Communication media may typically be embodied by computer readable instructions, data structures, program modules, or other data in a modulated data signal, such as a carrier wave or other transport mechanism, and includes any information delivery media. The term "modulated data signal" means a signal that has one or more of its characteristics set or changed in such a manner as to encode information in the signal. By way of example, and not limitation, communication media includes wired media such as a wired network or direct-wired connection, and wireless media such as acoustic, RF, infrared and other wireless media. The term computer-readable media as used herein includes both storage media and communication media.

### Generic architecture

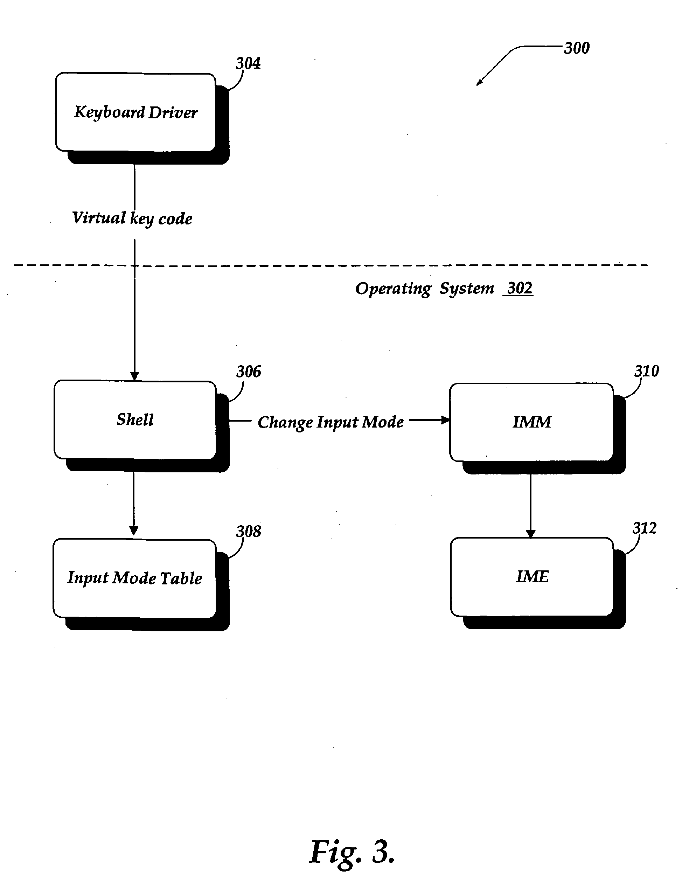

FIGURE 3 is a functional block diagram generally illustrating components of a system 300 in accordance with the present invention. Illustrated are an operating system 302, keyboard driver 304, a shell 306, an input mode table 308, an Input Method Manager 310, and an Input Method Editor 312. The keyboard driver 304 supports a hardware keyboard and responds to button presses on the hardware keyboard by issuing key codes to the shell 306 based on the pressed key. In accordance with the invention, if a user presses moji key 108, the keyboard driver 304 posts a key code (a Virtual-Key Code) corresponding to that dedicated key (i.e., moji key 108) to the shell.

In response to the key code for the dedicated key, the shell 306 queries the IMM 310 to verify and determine which mode is the currently selected input mode. With the current input mode verified, the shell 306 refers to the input mode table 308 to determine the next input mode. The input mode table 308 may be one or more language-dependent tables. There may be a different input mode table 308 for each language. Each input mode table 308 may have stored therein the current input mode (for example, full-width hiragana), the next input mode (for example, half-width hiragana), a list of modes (for example, see table 302 below), and optionally an icon corresponding to each mode.

After determining the next input mode, the shell 306 issues an instruction to the IMM 310 to change the current input mode to the next input mode. For example, according to the Input Mode table, the shell 306 may call an IMMSetConversionStatus instruction on the IMM 310 to set the new mode. Based on the current input mode and the Input Mode Table 308, the shell 306 visually reflects the next input mode in the shell indicator, such as on a Software Input Panel (SIP) (not shown), which may be shown using display 106.

The invention allows East Asian Language (EA) users to switch between different input modes using a single key on the hardware keyboard. When the special key is pressed, an icon may replace the current SIP icon with a picture that visually communicates to the user the current input mode. Additionally, the shell 306 may provide a signal (such as an identifiable sound) that signifies that the moji key 108 has been pressed and/or that indicates the next input mode.

If the user switches from the SIP to the keyboard, the shell 306 may ping the IMM 310 to retrieve the current selected input mode and overwrite the mode associated with the keyboard. If the user switches from the keyboard to the SIP, the shell 306 may ping the IMM 310 and overwrite the SIP input mode accordingly.

### Localized Input Mode tables

The tables that follow are examples of the information that may be stored in one or more input mode tables 308 to identify the input modes or sub-modes for characters used in various languages that include non-alphabetic characters (such as the particular EA Languages listed below in the following tables). Each EA language may have a fixed number of input modes and icons. Pressing the moji key 108 repeatedly produces a series of commands that will typically cause each of the listed input modes to be selected in turn. When the last mode that is listed is selected, pressing the moji key 108 again will typically cause the first listed input mode to be selected as the (newest) currently selected character input mode. (Other permutations of selecting input modes are possible.)

Table 302 is a list of example input modes for the Japanese language. Native character sets include katakana and hiragana, which include non-alphanumeric characters. (A non-alphanumeric character set comprises characters that are not contained in the alphabet or contained in the set of Arabic numerals.) A non-native alphanumeric character set may be used. The character sets may be displayed as either full-width characters or half-width characters.

**Table 302**

| **(Japanese)** | |
|---|---|
| **Mode** | **IMMSetConversionStatus Parameters** |
| Full-width Hiragana | IME_CMODE_FULLSHAPE : 1, IME_CMODE_KATAKANA: 0, IME_CMODE_NATIVE: 1 |
| Full-width Katakana | IME_CMODE_FULLSHAPE: 1, IME_CMODE_KATAKANA : 1, ME_CMODE_NATIVE : 1 |
| Half-width | IME CMODE FULLSHAPE : 0, |
| Katakana | IME_CMODE_KATAKANA : 1, |
| | IME_CMODE_NATIVE : 1 |
| Full-width'Alpha-numeric | IME_CMODE_FULLSHAPE : 1, |
| | IME_CMODE_KATAKANA : 0, |
| | IME_CMODE_NATIVE : 0 |
| Half-width Alpha-numeric | IME_CMODE_FULLSHAPE : 0, |
| | IME_CMODE_KATAKANA : 0, |
| | IME_CMODE_NATIVE: 0 |

Table 304 is a list of example input modes for the Korean language. Native character sets include Hangul, which also includes non-alphanumeric characters. A non-native alphanumeric character set may be used. The character sets may be displayed as either full-width characters or half-width characters.

**Table 304**

| **(Korean)** | |
|---|---|
| **Mode** | **IMMSetConversionStatus Parameters** |
| Hangul | IME_CMODE_FULLSHAPE: 0, |
| | IME_CMODE_NATIVE: 1 |
| Alpha- | IME_CMODE_FULLSHAPE : 0, |
| numeric | IME_CMODE_NATIVE: 0 |

Table 306 is a list of example input modes for the Chinese language. Native character sets include Chinese characters. A non-native alphanumeric character set may be used. The character sets may be displayed as either full-width characters or half-width characters.

**Table 306**

| **(Chinese)** | |
|---|---|
| **Mode** | **IMMSetConversionStatus Parameters** |
| Chinese with Full- | IME_CMODE_FULLSHAPE : 1, |
| width Alpha- | IME_CMODE_NATIVE : 1 |
| numeric | |
| Chinese with Half- | IME_CMODE_FULLSHAPE : 0, |
| Width Alpha- | IME_CMODE_NATIVE : 1 |
| numeric | |
| Full-width Alpha- | IME_CMODE_FULLSHAPE : 1, |
| numeric | IME_CMODE_NATIVE : 0 |
| Half-width Alpha- | IME_CMODE_FULLSHAPE : 0, |
| numeric | IME_CMODE_NATIVE : 0 |

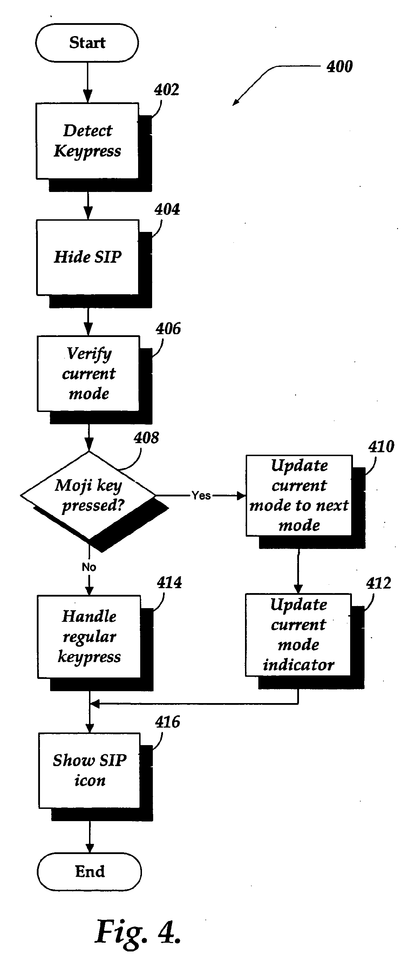

FIGURE 4 is a logical flow diagram generally illustrating a process for switching between input modes using a dedicated key on a mobile device, in accordance with the invention. The process illustrated in FIGURE 4 may be employed by the components illustrated in FIGURE 2, or by other components, to implement the present invention.

In step 402, a keypress is detected. The detected keypress may include general keys that are located on the mobile device, the moji key, or a soft key (such as from the SIP). In step 404, the SIP is optionally hidden (if visible) in response to the detected keypress. In step 406, the process verifies which of the character modes of listed in an input mode table is the currently selected character input mode.

In step 408, the process determines whether the moji key has been pressed. If the moji key has been pressed, the process continues in step 410 where the input mode table is consulted to determine the next character input mode. The next character input mode is typically the character mode following the currently selected character input mode in the table. In step 412, the display of the mobile device is optionally updated to display which input mode is currently selected.

If the moji key has not been pressed, the process continues in step 414 where the process handles the regular key press in accordance with, for example, the user application that is being run by the user. In step 416, the SIP icon is displayed, which allows the user to reveal the SIP (if hidden).

Other embodiments of the invention are possible without departing from the spirit and scope of the invention. For example, different character sets from different (non-native) languages can be embodied with in a single input mode table. The above specification, examples, and data provide a complete description of the manufacture and use of the composition of the invention. Since many embodiments of the invention can be made without departing from the spirit and scope of the invention, the invention resides in the claims hereinafter appended.

## Claims

1. An apparatus for entering text, comprising:
a table that is configured to accessibly store a list of possible character input modes, wherein the list of possible character input modes comprises a mode for selecting characters from a character set having non-alphanumeric characters and a mode for selecting characters from an alphabetic character set such that a currently selected character input mode is selected from the list of possible character modes;
a key that is configured to receive a mode change command from a user to change the currently selected character input mode to a different character input mode;
a selector that is configured to select a new character input mode from the list of possible character input modes that is different from the identified one of the character modes listed in the table in response to a received mode change command such that the new character input mode is identified as the currently selected character input mode.

2. The apparatus of claim 1, wherein the list of possible character input modes further comprises a mode for displaying characters using a first width and a mode for displaying characters using a second width that is smaller than the width of the first width.

3. The apparatus of claim 2, wherein the selector is further configured to display an image identifying the currently selected character input mode upon a display.

4. The apparatus of claim 3, wherein the selector is further configured to change the image identifying the currently selected character input mode in response to the received change current character input mode command.

5. The apparatus of claim 1, wherein the selector comprises a shell that is associated with an operating system.

6. The apparatus of claim 1, further comprising a keyboard driver that is configured to send a particular virtual key to the selector in response to the received change current character input mode command.

7. The apparatus of claim 1, wherein the selector is further configured to signal the user in response to the first received change current character input mode command.

8. The apparatus of claim 1, wherein the selector is further configured to select character modes in the table sequentially such that a character mode following the currently selected character input mode in the table is selected in response in response to a change current character input mode command received by the key.

9. The apparatus of claim 1, wherein the selector is further configured to iteratively select character modes in the list of possible character modes in response to each command in a series of received mode change commands such that all character modes in the list of possible character modes have been selected at least once during the series of received mode change commands.

10. A method for changing the current character input mode in a mobile device, comprising:
detecting a keypress of a dedicated key that is used to input a change current character input mode command from a user;
verifying which one of the character modes listed in an input mode table is the currently selected character input mode;
referring to the input mode table to identify a next character input mode; and
selecting the next character input mode to be the next currently selected character input mode.

11. The method of claim 10, further comprising displaying characters according to the currently selected character input mode.

12. The method of claim 11, further comprising displaying an image that identifies which character input mode is currently selected.

13. The method of claim 12, further comprising changing the image identifying the currently selected character input mode in response to the detection of a keypress of the dedicated key.

14. The method of claim 10, further comprising using a keyboard driver to send a virtual key to an operating system in response to the detection of a keypress of the dedicated key.

15. The method of claim 10, further comprising signaling the user in response to the detection of a keypress of the dedicated key.

16. The method of claim 10, further comprising selecting character modes in the table sequentially such that a character mode following the currently selected character input mode in the table is selected in response in response to the detection of a keypress of the dedicated key.

17. The method of claim 16, further comprising selecting character modes in the table sequentially such that the first character mode in the table is selected in response in response to the detection of a keypress of the dedicated key when the currently selected character input mode in the table is the last character mode.

18. A mobile device, comprising:
means for detecting a keypress of a dedicated key that is used to input a change current character input mode command from a user;
means for verifying which one of the character modes listed in an input mode table is the currently selected character input mode;
means for referring to the input mode table to identify a next character input mode; and
means for selecting the currently selected character input mode to the next character input mode.

19. A computer-readable medium containing instructions for implementing the method of claim 10.

20. A computer system that is configured to execute the method of claim 10.
